(19) Europäisches Patentamt
European Patent Office
Office européen des brevets

(11) EP 1 687 475 B1

(12) **FASCICULE DE BREVET EUROPEEN**

(45) Date de publication et mention de la délivrance du brevet:
**24.11.2010 Bulletin 2010/47**

(21) Numéro de dépôt: **04816359.6**

(22) Date de dépôt: **26.11.2004**

(51) Int Cl.:
***D06M 15/21*** *(2006.01)* ***C08F 290/04*** *(2006.01)*
***B60R 21/16*** *(2006.01)* ***D06M 101/16*** *(2006.01)*

(86) Numéro de dépôt international:
**PCT/FR2004/003028**

(87) Numéro de publication internationale:
**WO 2005/052245 (09.06.2005 Gazette 2005/23)**

(54) **FILS, FIBRES ET FILAMENTS POUR TISSAGE SANS ENCOLLAGE**

FÄDEN, FASERN UND FILAMENTE ZUM SCHLICHTEFREIEN WEBEN

THREADS, FIBRES AND FILAMENTS FOR WEAVING WITHOUT SIZING

(84) Etats contractants désignés:
**AT BE BG CH CY CZ DE DK EE ES FI FR GB GR HU IE IS IT LI LU MC NL PL PT RO SE SI SK TR**

(30) Priorité: **26.11.2003 FR 0313865**

(43) Date de publication de la demande:
**09.08.2006 Bulletin 2006/32**

(73) Titulaire: **Rhodia Industrial Yarns AG**
**6021 Emmenbrucke (CH)**

(72) Inventeur: **BORDES, Bertrand**
**F-69006 Lyon (FR)**

(74) Mandataire: **Chatelan, Florence Anne**
**Rhodia Services**
**Direction Propriété Industrielle**
**85 rue des Frères Perret**
**69192 Saint-Fons Cedex (FR)**

(56) Documents cités:
**EP-A- 0 945 543**
**WO-A-97/28200**
**US-A- 5 713 598**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 687 475 B1

Printed by Jouve, 75001 PARIS (FR)

## Description

L'invention concerne des fils, fibres et filaments tissables sans encollage, et un procédé de fabrication de ces fils, fibres et filaments. L'invention concerne plus particulièrement des fils, fibres, filaments traités par un copolymère greffé. Elle concerne également des tissus obtenus sans étape d'encollage à partir de ces fils, fibres et filaments, et un procédé de tissage sans encollage à partir de ces fils, fibres et filaments, notamment à l'aide d'un métier sec. Enfin l'invention concerne l'utilisation des fils, fibres et et filaments ainsi que les tissus dans le domaine des sacs gonflables de sécurité.

Lors de l'utilisation des chaînes, principalement en tissage, il est connu que les fils frottent d'une part les uns contre les autres du fait du mouvement de montée et descente des lames, et d'autre part contre des éléments du métier tels que oeillets des lisses dans lesquels ils passent, dents du peigne, battant, dérouleur, casse chaînes, etc. Afin d'éviter que les frottements n'entraînent des défauts préjudiciables à l'opération même de tissage et à la qualité du tissu réalisé, il est réalisé sur fils un traitement préalable appelé encollage. Ce traitement bien connu par son application sur filés de fibres pour assurer la cohésion des fibres et former une gaine de protection du filé, est aussi appliqué sur les fils continus multifilamentaires artificiels et synthétiques ; l'encollage doit assurer le maintien en place et la protection des filaments généralement de titres fins donc fragiles, et entourer les fils continus d'une gaine évitant les frottements décrits précédemment et faciliter de ce fait les glissements à la fois sur les organes du métier et entre fils, en vue de réaliser des tissus sans défaut d'aspect, et en évitant au maximum les casses et éraillures. Ces produits d'encollage sont généralement éliminés après le tissage par traitement du tissu, lors de l'opération de désencollage.

Pour assurer la cohésion du fil, on réalise généralement sur celui-ci une opération de torsion. Toutefois, cette opération de torsion est de plus en plus remplacée par un procédé pneumatique d'entrelacement des filaments. Ainsi, selon la pression du fluide et le moyen d'entrelacement, on peut faire varier le nombre de points de cohésion, c'est à dire le nombre de points an niveau desquels les filaments forment un noeud, en fonction de l'aspect final désiré pour le fil et son utilisation ultérieure.

Pour faciliter le glissement des fibres et des fils, on applique couramment des huiles ou des produits d'ensimage. En ce qui concerne les fils continus artificiels et synthétiques, ces huiles ou ensimages sont appliqués sur le fil en une ou plusieurs fois lors de son procédé de production.

Afin d'économiser les coûts des opérations d'encollage et désencollage et supprimer ainsi deux opérations de manipulation des fils, on a cherché à supprimer l'opération d'encollage, qui est de plus néfaste à l'environnement. En outre, le produit dl'encollage peut se révéler difficile à éliminer complètement, en fonction du type de produit utilisé, du type de fil, et de la contexture du tissu, ce qui risque d'entraîner la présence de résidus de colle dans le tissu. La présence de ces résidus peut se révéler néfaste, en particulier dans le domaine des sacs de sécurité gonflables ; par exemple elle peut diminuer les performances du produit lors de son vieillissement.

Ainsi, la présente invention propose, dans un premier objet, des fils, fibres, filaments tissables sans encollage, un copolymère greffé étant présent sur au moins une partie de la surface des fils, fibres ou filaments, le copolymère greffé comprenant au moins trois séquences de nature chimique distincte, parmi lesquelles une ou plusieurs séquence (s) d'ancrage sur les solides, une ou plusieurs séquence(s) à caractère hydrophobe et une ou plusieurs séquence(s) à caractère hydrophile, constitué de :

a) 1 à 80 % massique, de préférence 5 à 40 % massique, d'une ou plusieurs séquence(s) d'ancrage sur solides, constituée(s) par une chaîne hydrocarbonée, linéaire ou ramifiée, cycloalkyle ou aromatique, comportant des groupements azotés basiques de type : hétérocycliques, $-NH_2$, -NH-, -NHR, ou $-NR_2$, $-CONH_2$, -CONHR, $-CONR_2$ (où R est un radical ($C_1$-$C_6$) alkyle, optionnellement substitué par un ou plusieurs groupement(s) - OH, -COO-, -CO-, -O-, $-SO_3H$), pouvant comporter des groupements -COO-, la teneur massique en monomères azotés basiques dans la chaîne d'ancrage étant au minimum de 5 %, et de préférence de 30 %, et

b) au moins 10 % massique, de préférence 25 à 80 % massique, d'une ou plusieurs séquence(s) à caractère hydrophobe, constituée(s) par une chaîne hydrocarbonée, linéaire ou ramifiée, cycloalkyle ou aromatique, pouvant comporter des groupements - COO-, -S-, -F, $-Si(OR')_n(R'')_{2-n}-$ (où R' et R" représentent des radicaux alkyles ou aryles, semblables ou différents, en $C_1$- $C_{10}$, et n = 0 à 2), formée(s) d'unités monomère dont le paramètre de solubilité est inférieur ou égal à 21,5 $J^{1/2}/cm^{3/2}$, de préférence inférieur à 19 $J^{1/2}/cm^{3/2}$

c) au moins 10 % massique, de préférence 15 à 70 % massique, d'une ou plusieurs séquence(s) à caractères hydrophile, constituée(s) par une chaîne hydrocarbonée, linéaire ou ramifiée comportant des groupements -O-, -OH, -NCO, -COO-, -COOH, - $CONH_2$, -CONHR"' (où R"' est un radical ($C_1$-$C_3$) alkyle), -NH-, -S-, $-SO_3H$, formée (s) d'unités monomère dont le paramètre de solubilité est supérieur à 22 $J^{1/2}/cm^{3/2}$, de préférence supérieur à 22,5 $J^{1/2}/cm^{3/2}$

Dans un second objet, l'invention propose un procédé de préparation de ces fils, fibres, filaments.

L'invention propose, dans un troisième objet, un tissu obtenu notamment à partir de fils, fibres, filaments, ainsi

qu'un procédé d'obtention de ce tissu.

Enfin l'invention propose ; dans un quatrième objet, l'utilisation de ces fils, fibres, filaments et tissus dans le domaine des sacs gonflables de sécurité.

De manière avantageuse, il existe trois manières différentes de combiner les trois types de séquence : d'ancrage, hydrophobe et hydrophile. Les copolymères greffés selon l'invention peuvent donc présenter alternativement les structures suivantes :

- chaîne principale d'ancrage+au moins 2 greffons respectivement hydrophile(s) et hydrophobe(s)
- chaîne principale hydrophobe + au moins 2 greffons respectivement hydrophile(s) et d'ancrage
- chaîne principale hydrophile + au moins 2 greffons respectivement hydrophobe(s) et d'ancrage.

Les paramètres de solubilité exprimés eu J $^{1/2}$/cm $^{3/2}$, ont été calculés par la méthode d'incrémentation d'Hoftyzer-Van Krevelen ou mesurés expérimentalement. Les volumes molaires nécessaires lors du calcul des paramètres de solubilité sont calculés à partir des données de Feedor. Ces méthodes de calcul et valeurs expérimentales sont exposées dans l'ouvrage : D.W.VAN KREVELEN, « Properties of polymers. Their correlation with chemical structure ; their numerical estimation and prediction from additive group contributions », Third edition, Elsevier, 1990, p.189-225.

Des procédés d'obtention du copolymère greffé de l'invention sont décrits dans la demande de brevet WO 97/28200.

Avantageursement la masse moléculaire de la (des) séquence(s) d'ancrage, de la (des) séquence(s) à caractère hydrophobe et de la (des) séquence(s) à caractère hydrophile du copolymère greffé est inférieure ou égale à 10000.

Avantageusement, la ou les séquence(s) d'ancrage du copolymère greffé comprend des groupements azotés basiques introduits à partir d'un ou plusieurs composé(s) choisis parmi :

a) - les vinylpyridines, telles que 2-vinylpyridine, 3-vinylpyridine, 4-vinylpyridine ou 2-méthyl-5-vinylpyridine,

- la vinylimidazole, la 2-méthyl-N-vinylimidazole, la vinylcarbazole, la N-vinylpyrrolidone, la 3-méthyl-N-vinylpyrazole, la 4-méthyl-5vinylthiazole, la N-vinylcaprolactame, le méthacrylate d'éthylimidazolidone,
- les (méth)acrylamides telles que (méth)acrylamide, N-méthylacrylamide, N-isopropylacrylamide et N, N-diméthylacrylamide,
- la N-méthylol(méth)acrylamide, la N,N-diméthylol(méth)acrylamide, l'acide 2-acrylamido-2-méthyl-1-propanesulfonique, la diacétone acrylamide, la méthyl-2-acrylamido-2-méthoxyacétate, la N-tris(hydroxyméthyl) méthylacrylamide,
- les aminoalkyl(méth)acrylates de formule suivante

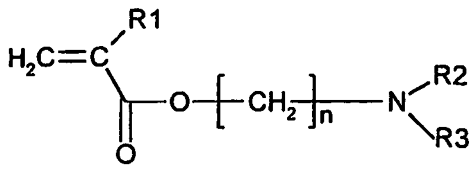

où $R_1$ est un atome d'hydrogène ou un radical ($C_1$- $C_4$) alkyle; $R_2$ et $R_3$ identiques ou différents représentent chacun un radical ($C_1$- $C_6$) alkyle, n = 0 à 6,
lesdits groupements azotés étant dans ce premier cas introduits par copolymérisation radicalaire d'un ou plusieurs monomère(s) éthylénique(s) insaturés cités ci-dessus, et

b) - la N-N-diéthyl-1,4-butanediamine, la 1-(2-aminoéthyl)-pipérazine, la 2-(1-pyrrolidyl)-éthylamine, la 4-amino-2-méthoxy-pyrimidine, le 2-diméthylamino-éthanol, la 1-(2-hydroxyéthyl)-pipérazine, la 4-(2-hydroxyéthyl)-morpholine, la 2-mercaptopyrimidine, la 2-mercaptobenzimidazole, la N,N-diméthyl-1,3-propanediamine, la 4-(2-aminoéthyl)-pyridine, la N-N-diallyl-mélamine, le 3-amino-1,2,4-triazole, le 1-(3-aminopropyl)-imidazole, la 4-(2-hydroxyéthyl)-pyridine, le 1-(2-hydroxyéthyl)-imidazole, le 3-mercapto-1,2,4-triazole,
lesdits groupements azotés étant dans ce second cas fixés sur un copolymère, linéaire ou greffé, en mettant à profit des fonctions réactives introduites le long de la chaîne préformée.

Avantageusement, la ou les séquence(s) à caractère hydrophobe du copolymère greffé sont constituée(s) à partir d'unités monomères choisies parmi :

- les esters d'acide (méth)acrylique tels que (méth)acrylate de méthyle, (méth)acrylate d'éthyle, (méth)acrylate de

propyle, (méth)acrylate de butyle, (méth)acrylate d'hexyle, (méth)acrylate de cyclohexyle, (méth)acrylate d'éthylhexyle, (méth)acrylate d'octyle, (méth)acrylate de nonyle, (méth)acrylate d'isodécyle, (méth)acrylate de lauryle, (méth)acrylate de stéaryle, (méth)acrylate de pentadécyle, (méth)acrylate de cétyle, (méth)acrylate de béhényle, (méth)acrylate de 3-(triméthoxysilyl)propyle,

- les esters vinyliques tels que acétate de vinyle, propionate de vinyle, butyrate de vinyle, sorbate de vinyle, hexanoate de vinyle, éthylhexanoate de vinyle, laurate de vinyle, stéarate de vinyle,
- le styrène et les alkylstyrènes tels que $\alpha$-méthylstyrène, vinyltoluène, tertiobutylstryrène,
- les diènes tels que butadiène, isoprène, pouvant être hydrogénés après polymérisation,
- les alkylènes tels que éthylène, propylène,
- les siloxanes tels que diméthylsiloxane, diphénylsiloxane, méthylphénylsiloxane,
- les composés fluorés tels que (méth)acrylate de trifluoroéthyle, (méth)acrylate de pentafluoropopyle, (méth)acrylate d'heptafluorobutyle, (méth)acrylate d'octafluoropentyle, (méth)acrylate de pentadécafluorooctyle, (méth)acrylate d'eicosafluoroundécyle, fluorure de vinyle, tétrafluoroéthylène,

ou de produits de polycondensation, polyesters ou polyamides.

Avantageusement, la ou les séquence(s) à caractère hydrophile du copolymère greffé sont constitué(s) à partir d'unités monomère choisies parmi :

- l'oxyde d'éthylène
- les acides (méth)acryliques, l'acide maléique, l'acide fumarique, l'acide itaconique,
- les dérivés d'acrylamide tels que la (méth)acrylamide, la N-méthylacrylamide, la N-isopropylacrylamide,
- l'éthylèneimine,
- l'alcool vinylique,
- la vinylpyrrolidone, la vinylméthyloxazolidone,
- le vinylsulfonate,
- le méthallylsulfonate de sodium
- le méthacrylate de glycérol.

De préférence, le copolymère greffé comprend :

- une chaîne principale d'ancrage sur les particules solides comportant des groupements de (méth)acrylate de dialkylaminoéthyle, N,N-diméthalylacrylamide, 2-vinylpyridine, 4-vinylpyridine, seuls ou en mélange,
- un ou plusieurs greffons hydrophiles poly(oxyde d'éthylène), et
- un ou plusieurs greffons hydrophobes à base de (méth)acrylates d'alkyle, d'esters vinyliques seuls ou copolymérisés avec des dérivés styréniques ou alkylstyréniques, des monomères fluorés tels que le méthacrylate de trifluoroéthyle, ou du méthacrylate de 3-(triméthoxysilyl)propyl.

Dans le cas d'un fil multifilamentaire, le traitement permet d'améliorer la cohésion des filaments entre eux.

Les fils, fibre, filaments de l'invention peuvent être d'origine naturelle, artificielle et/ou synthétique. Ils peuvent également être de plusieurs origines : à titre d'exemple on peut citer un filé de fibres de polyamide et de coton.

Les fils, fibres, filaments de l'invention sont avantageusement à base de polymère thermoplastique. A titre d'exemple on peut citer comme (co) polymère thermoplastique convenable dans le cadre de l'invention : les polyoléfines, les polyesters, les polyoxydes d'alkylène, les polyoxyalkylènes, les polyhalogénoalkylènes, les poly(alkylène-phtalate ou téréphtalate), les poly(phény ou phénylène), poly(oxyde ou sulfure de phénylène), les acétates de polyvinyle, les alcools polyvinyliques, les halogénures de polyvinyle, les halogénures de polyvinylidène, les polyvinyles nitriles, les polyamides, les polyimides, les polycarbonates, les polysiloxanes, les polymères d'acide acrylique ou méthacrylique, les polyacrylates ou méthacrylates, les polymères naturels que sont la cellulose et ses dérivés, les polymères synthétiques tels que les élastomères synthétiques, ou les copolymères thermoplastiques comprenant au moins un monomère identique à l'un quelconque des monomères inclus dans les polymères sus-mentionnés, ainsi que les mélanges et/ou les alliages de tous ces (co)polymères.

Comme autres polymères thermoplastiques préférés de l'invention, on peut citer les polyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères.

Plus précisément, ces copolyamides peuvent être, par exemple, le polyadipamide d'hexaméthylène, les polyphtalamides obtenus à partir d'acide téréphtalique et/ou isophtalique tels que le polyamide commercialisé sous le nom commercial AMODEL, les copolyamides obtenus à partir d'acide adipique, d'hexaméthylène diamine et de caprolactame.

Avantageusement, le polymère thermoplastique est un polyester, tel que le polyéthylène téréphtalate (PET), le polypropylène téréphtalate (PPT), le polybutylène téréphtalate (PBT), leurs copolymères et mélanges.

De manière plus préférée encore, le polymère thermoplastique est sélectionné dans le groupe de (co)polyamides comprenant : le polyamide 6, le polyamide 6.6, le polyamide 4, le polyamide 11, le polyamide 12, les polyamides 4-6, 6-10, 6-12, 6-36, 12-12, leurs copolymères et mélanges.

Les fils, fibres et filaments de l'invention peuvent être à base d'un mélange de polymères thermoplastique ou de copolymères thermoplastiques.

Les fils, fibres, filaments de l'invention peuvent comprendre des additifs tels que des charges de renfort, des ignifugeants, des stabilisants aux UV, à la chaleur, des matifiants tels que le dioxyde de titane, des agents bioactifs etc.

Le copolymère représente avantageusement entre 0.1 et 5% en poids par rapport au poids du fil, de préférence entre 0.2 et 2%.

Le titre global des fils de l'invention peut être choisi dans toute la gamme des tittres de fils habituels, par exemple entre 10 dtex et 1100 dtex. Dans le domaine des sacs gonflables de sécurité, le titre global est avantageusement compris entre 200 et 950 dtex.

Le titre au brin des fils de l'invention peut être choisi dans toute la gamme des titres de fils habituels. Le titre au brin est généralement supérieur ou égal à 0.3 dtex. Il est habituellement inférieur à l'équivalent en dtex d'un diamètre de 800 microns dans le cas de monofilaments de gros diamètre. Dans le domaine des sacs gonflables de sécurité, les fils sont généralement multifilamentaires et le titre au brin est avantageusement compris entre 1.5 et 7 dtex.

L'invention concerne également un procédé de préparation des fils, fibres, filaments comprenant les étapes suivantes :

1) filer le matériau constitutif du fil
2) éventuellement étirer le fil
3) éventuellement texturer le fil
4) traiter le fil à l'aide d'un liquide comprenant le copolymère greffé tel que décrit ci-dessus

L'étape 1) de filage est réalisée selon toute méthode connue de l'homme du métier.

Lorsque le matériau du fil est un polymère thermoplastique, l'étape 1) est avantageusement une étape de filage à l'état fondu du polymère.

Les fils, fibres, filaments de l'invention peuvent subir un étirage. Ainsi le fil peut être étiré le long du chemin de filage selon tout procédé connu, au taux désiré selon l'orientation et les caractéristiques mécaniques que l'on souhaite lui conférer. Il peut aussi être simplement préorienté ou orienté au filage selon la vitesse finale de renvidage. Il peut être obtenu directement ou repris sur des rouleaux pour réguler la tension de renvidage, si cela s'avère utile ou nécessaire. L'étape 2) peut être réalisée de manière intégrée au filage ou non.

La vitesse de renvidage est généralement comprise entre 400 et 8000 m/min, avantageusemene comprise entre 600 et 5000 m/min, de préférence comprise entre 700 et 3500 m/min.

L'étape 3) de texturation peut être réalisée selon toute méthode connue de l'homme du métier.

L'étape 4) de traitement peut être réalisée avant ou après l'éventuelle étape d'étirage. L'étape 4) de traitement peut également être réalisée avant ou après l'éventuelle étape 3) de texturation. Le copolymère du traitement de l'étape 4) est généralement mis en oeuvre sous la forme d'une solution, d'une émulsion ou d'une dispersion dans un liquide.

Le copolymère peut par exemple être mis en oeuvre sous la forme d'une solution aqueuse.

Le copolymère peut également être intégré dans des compositions classiques d'ensimages.

Les ensimages convenables pour l'invention sont tous les ensimages classiquement utilisés dans le domaine du filage de polymères, en particulier du filage de polyamide ou de polyesters. Les compositions d'ensimages sont habituellement des huiles ou des émulsions aqueuses.

Le liquide du procédé de l'invention peut également comprendre d'autres composés que le copolymère greffé et éventuellement un ensimage, tels que des agents tensioactifs, antistatiques qui sont usuellement employés dans les compositions d'ensimage.

Selon un mode de réalisation particulier de l'invention, le copolymère représente entre 5 et 35% en poids par rapport au poids du liquide, de préférence entre 10 et 20%.

Le traitement de l'étape 4) peut être réalisé selon les techniques habituelles telles que le dépôt par rouleaux ou à l'aide de gudulettes. Parmiles techniques habituelles, on pourra citer, à titre d'exemples et de manière non limitative, la technique de traitement de la fibre brute au rouleau, par spray ou vaporisation, par trempage, la technique du foulardage, ainsi que toute méthode utilisée dans l'industrie textile de traitement de fibres synthétiques. Ce traitement peut être effectué à différentes étapes de la manufacture des fils. Il s'agit entre autres de toutes les étapes où sont classiquement ajoutés des ensimages. On peut ainsi appliquer l'additif en bas de métier de filage avant renvidage. On peut aussi, dans le cas des procédés dit "fibres" appliquer l'additif avant, pendant ou après les étapes d'étirage, de frisage ou de séchage, etc....

Dans certains cas, il pourra en outre être avantageux de faire subir au fil un premier traitement préalable (prétraitement) selon des méthodes connues de l'homme du métier, afin de favoriser l'adhérence du copolymère greffé au fil. En outre, il pourra également être envisagé de faire subir au fil, avant ou après le traitement de l'étape 4), d'autres traitements chimiques ou physiques tels que par exemple irradiation, teinture et autres.

L'invention concerne également un tissu comprenant au moins en partie des fils, fibres ou filaments tels que décrits ci-dessus, ainsi qu'un procédé d'obtention de ce tissu. Les fils utilisés pour la réalisation du tissu peuvent être de même nature ou de nature différente, par exemple on peut mettre en oeuvre des fils de chaîne en polyamide et des fils de trame en coton.

Les fils de l'invention peuvent être utilisés par exemple comme fils de chaîne sur les métiers à tisser industriels. Ils permettent notamment de réaliser un tissu sans étape d'encollage.

Les fils de l'invention, lorsqu'ils sont utilisés comme fils de chaîne peuvent être mis en oeuvre facilement soit en ourdissage direct soit en ourdissage sectionnel sans nécessiter d'encollage et peuvent être tissés sur tous les types de métier à tisser, en particulier sur les métiers à grande vitesse utilisés industriellement.

Dans certains cas, par exemple lorsque le fil est destiné à être tissé sur des métiers occasionnant aux fils de chaîne des contraintes élevées, il peut être préférable d'effectuer le cirage des fils avec tout produit habituellement utilisé avant la réalisation du tissage.

Avantageusement, les tissus comprenant les fils de l'invention sont obtenus à l'aide d'un métier à tisser à sec, tel qu'un métier à jet d'air, un métier à lance(s) ou un métier à projectile(s).

Les fils, fibres, filaments et tissus de l'invention sont particulièrement utiles dans le domaine des sacs gonflables de sécurité. Les fils peuvent être utilisés pour la réalisation de tissus pour sacs gonflables de sécurité. Ces tissus sont réalisés sans étape d'encollage, ce qui simplifie -au moins au niveau du tissage- la méthode d'obtention de tels articles, et diminue son coût.

La présence du copolymère greffé à la surface des fils, fibres et filaments n'a pas d'influence sur les traitements ultérieurs que le tissu peut subir, notamment lorsque le tissu est utilisé dans le domaine des sacs gonflables de sécurité. A titre d'exemple de tels traitements ultérieurs, on peut citer la thermofixation, l'enduction par un élastomère etc.

D'autres détails ou avantages de l'invention apparaîtront plus clairement au vu des exemples donnés ci-dessous uniquement à titre indicatif.

La figure 1 représente de manière simplifiée la méthode d'abrasion du fil en vue de la détermination de son indice de cohésion après abrasion.

Test de détermination d'indice de cohésion du fil, avant et après abrasion

Une bobine de fil à tester est conditionnée au moins 48h à 23° et à une hygrométrie de 63%.

L'indice de cohésion conféré aux filaments individuels du fil est évalué selon la méthode suivante : le fil est coupé par une lame sur un appareil « Shirley ». Les vibrations émises par la lame au fur et à mesure de la coupe des filaments individuels sont enregistrées et comptées. L'indice de cohésion est défini par la relation :

$$\text{indice de cohésion}(\%) = 100.\frac{\text{nombre de filaments} - \text{nombre de vibrations}}{\text{nombre de filaments} - 1}$$

De ce fait, l'indice de cohésion est de 0% si tous les filaments sont comptés individuellement, et de 1 si tous les filaments sont coupés comme un objet unique.

L'indice de cohésion est déterminé avant et après abrasion du fil sur un usomètre. La méthode d'abrasion à l'aide d'un usomètre est représentée schématiquement à la figure 1: 15 fils sont placés en parallèle, et pré-tendus à l'aide de masselottes. Ces fils sont ensuite pincés entre deux mors (1), de part et d'autre de la zone d'abrasion, puis coupés au-delà des mors. Les plots d'abrasion (2) sont alors poussés contre les fils jusqu'à une butée. La tension entre les 2 mors est contrôlée par une cellule de force (3) et ajustée à 3cN/tex. Le test est ensuite lancé : l'ensemble des mors oscille de manière à faire frotter les fils contre les plots d'abrasion, durant 50 cycles. Cet appareil reproduit de manière simplifiée les principales contraintes subies par les fils de chaîne sur un métier à tisser : tension et frottement fil/métal.

## EXEMPLES

### Exemple 1

Un fil A polyamide 66 commercialisé par la société Rhodia Industrial Yarns AG sous la référence T644 (470f68 : 470 filaments de titre au brin de 68 dtex) est dévidé et passé entre deux rouleaux dans un bain contenant un traitement

tel que décrit dans le tableau 1 ci-dessous, avant d'être renvidé à 450m/min.

La facilité de dévidage de la bobine est évalué qualitativement, l'indice de cohésion du fil avant et après est déterminé selon la méthode décrite ci-dessus.

Tableau 1

| Exemple | Traitement | Facilité de dévidage de la bobine | Indice de cohésion | Indice de cohésion après 50 cycles d'abrasion |
|---|---|---|---|---|
| Comparatif A | Aucun | Facile | 5% | 2% |
| 1 | Bain comprenant 10% en poids de Copojef, copolymère greffé commercialisé par la société Rhodia PPMC, dans de l'eau | Facile | 22% | 12% |

Le fil traité par le copolymère greffé est facilement manipulable, et présente de très bonnes propriétés de cohésion, aussi bien avant qu'après abrasion, par rapport à un fil non traité.

**Exemple 2**

Le fil A non traité selon l'exemple comparatif précédent, est ourdi à l'aide d'un ourdisseur sectionnel de manière à confectionner une chaîne A de 70m de long, 1,60m de large, de densité 15 fils/cm.

De même, le fil selon l'exemple 1 traité par le copolymère greffé est ourdi de la même manière, de manière à former une chaîne 2

Les deux chaînes sont tissées sur un métier jet d'air à 500 coups/min, avec en trame le fil A.

Le tissu réalisé à partir de la chaîne A présente de nombreux fils éclatés en chaîne et trame, de nombreux brins cassés en chaîne -ce qui oblige à réduire la tension de la chaîne-, une ouverture des fils de chaîne sur les buses de relance de la trame, conduisant à de nombreux défauts d'aspects. De plus, après l'obtention de 20m de tissu, les fils de chaîne placés à l'extrémité du peigne (2 fils par dent à cet endroit) se croisent, bloquant complètement la marche du métier.

En revanche, le tissu réalisé à partir de la chaîne 2 présente une diminution significative de l'éraillage, en particulier sur les bords ; les croisements de fils sur la chaîne ne conduisent plus à des défauts d'aspect, et la présence de quelques brins cassés n'occasionne toutefois pas de défaut d'aspect sur le tissu. La marche est bien meilleure et 70m de tissus sont obtenus avec peu d'arrêts.

Le tissage à l'aide de la chaîne 2 a pu être mis en oeuvre sans problème, et sans la nécessité d'une étape d'encollage, ce qui représente un avantage important.

**Revendications**

1. Fils, fibres ou filaments tissable sans encollage, **caractérisés en ce qu'**un copolymère greffé est présent sur au moins une partie de la surface des fils, fibres ou filaments, le copolymère greffé comprenant au moins trois séquences de nature chimique distincte, parmi lesquelles une ou plusieurs séquence(s) d'ancrage sur les solides, une ou plusieurs séquence(s) à caractère hydrophobe et une ou plusieurs séquence(s) à caractère hydrophile, constitué de :

    a) 1 à 80 % massique, de préférence 5 à 40 % massique, d'une ou plusieurs séquence(s) d'ancrage sur solides, constituée(s) par une chaîne hydrocarbonée, linéaire ou ramifiée, cycloalkyle ou aromatique, comportant des groupements azotés basiques de type : hétérocycliques, $-NH_2$, -NH-, -NHR, ou $-NR_2$, $-CONH_2$, -CONHR, $-CONR_2$ (où R est un radical $(C_1-C_6)$ alkyle, optionnellement substitué par un ou plusieurs groupement(s) - OH, -COO-, -CO-, -O-, $-SO_3H$), pouvant comporter des groupements -COO-, la teneur massique en monomères azotés basiques dans la chaîne d'ancrage étant au minimum de 5 %, et de préférence de 30 %, et
    b) au moins 10 % massique, de préférence 25 à 80 % massique, d'une ou plusieurs séquence(s) à caractère hydrophobe, constituée(s) par une chaîne hydrocarbonée, linéaire ou ramifiée, cycloalkyle ou aromatique, pouvant comporter des groupements - COO-, -S-, -F, $-Si(OR')_n(R'')_{2-n}-$ (où R' et R" représentent des radicaux alkyles ou aryles, semblables ou différents, en $C_1$- $C_{10}$, et n = 0 à 2), formée(s) d'unités monomère dont le

paramètre de solubilité est inférieur ou égal à 21,5 J ½/cm 3/2, de préférence inférieur à 19 J ½/cm 3/2
c) au moins 10 % massique, de préférence 15 à 70 % massique, d'une ou plusieurs séquence(s) à caractères hydrophile, constituée(s) par une chaîne hydrocarbonée, linéaire ou ramifiée comportant des groupements -O-, -OH, -NCO, -COO-, -COOH, - $CONH_2$, -CONHR''' (où R''' est un radical ($C_1$-$C_3$) alkyle), -NH-, -S-, -$SO_3H$, formée(s) d'unités monomère dont le paramètre de solubilité est supérieur à 22 J ½/cm 3/2, de préférence supérieur à 22,5 J ½/cm 3/2

**2.** Fils, fibres, filaments selon la revendication 1, **caractérisés en ce que** la masse moléculaire de la (des) séquence (s) d'ancrage, de la (des) séquence(s) à caractère hydrophobe et de la (des) séquence(s) à caractère hydrophile du copolymère greffé est inférieure ou égale à 10000

**3.** Fils, fibres, filaments selon la revendication 1 ou 2, **caractérisés en ce que** la ou les séquence(s) d'ancrage du copolymère greffé comprend des groupements azotés basiques introduits à partir d'un ou plusieurs composé(s) choisis parmi :

a) - les vinylpyridines, telles que 2-vinylpyridine, 3-vinylpyridine, 4-vinylpyridine ou 2-méthyl-5-vinylpyridine,

- la vinylimidazole, la 2-méthyl-N-vinylimidazole, la vinylcarbazole, la N-vinylpyrrolidone, la 3-méthyl-N-vinylpyrazole, la 4-méthyl-5vinylthiazole, la N-vinylcaprolactame, le méthacrylate d'éthylimidazolidone,
- les (méth)acrylamides telles que (méth)acrylamide, N-méthylacrylamide, N-isopropylacrylamide et N, N-diméthylacrylamide,
- la N-méthylol(méth)acrylamide, la N,N-diméthylol(méth)acrylamide, l'acide 2-acrylamido-2-méthyl-1-propanesulfonique, la diacétone acrylamide, la méthyl-2-acrylamido-2-méthoxyacétate, la N-tris(hydroxyméthyl) méthylacrylamide,
- les aminoalkyl(méth)acrylates de formule suivante

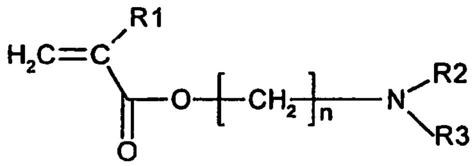

où $R_1$ est un atome d'hydrogène ou un radical ($C_1$- $C_4$) alkyle; $R_2$ et $R_3$ identiques ou différents représentent chacun un radical ($C_1$- $C_6$) alkyle, n = 0 à 6,
lesdits groupements azotés étant dans ce premier cas introduits par copolymérisation radicalaire d'un ou plusieurs monomère(s) éthylénique(s) insaturés cités ci-dessus, et

b) - la N-N-diéthyl-1,4-butanediamine, la 1-(2-aminoéthyl)-pipérazine, la 2-(1-pyrrolidyl)-éthylamine, la 4-amino-2-méthoxy-pyrimidine, le 2-diméthylamino-éthanol, la 1-(2-hydroxyéthyl)-pipérazine, la 4-(2-hydroxyéthyl)-morpholine, la 2-mercaptopyrimidine, la 2-mercaptobenzimidazole, la N,N-diméthyl-1,3-propanediamine, la 4-(2-aminoéthyl)-pyridine, la N-N-diallyl-mélamine, le 3-amino-1,2,4-triazole, le 1-(3-aminopropyl)-imidazole, la 4-(2-hydroxyéthyl)-pyridine, le 1-(2-hydroxyéthyl)-imidazole, le 3-mercapto-1,2,4-triazole,
lesdits groupements azotés étant dans ce second cas fixés sur un copolymère, linéaire ou greffé, en mettant à profit des fonctions réactives introduites le long de la chaîne préformée.

**4.** Fils, fibres, filaments selon l'une des revendications précédentes, **caractérisés en ce que** la ou les séquence(s) à caractère hydrophobe du copolymère greffé sont constituée(s) à partir d'unités monomères choisies parmi :

- les esters d'acide (méth)acrylique tels que (méth)acrylate de méthyle, (méth)acrylate d'éthyle, (méth)acrylate de propyle, (méth)acrylate de butyle, (méth)acrylate d'hexyle, (méth)acrylate de cyclohexyle, (méth)acrylate d'éthylhexyle, (méth)acrylate d'octyle, (méth)acrylate de nonyle, (méth)acrylate d'isodécyle, (méth)acrylate de lauryle, (méth)acrylate de stéaryle, (méth)acrylate de pentadécyle, (méth)acrylate de cétyle, (méth)acrylate de béhényle, (méth)acrylate de 3-(triméthoxysilyl)propyle,
- les esters vinyliques tels que acétate de vinyle, propionate de vinyle, butyrate de vinyle, sorbate de vinyle, hexanoate de vinyle, éthylhexanoate de vinyle, laurate de vinyle, stéarate de vinyle,
- le styrène et les alkylstyrènes tels que α-méthylstyrène, vinyltoluène, tertiobutylstryrène,

- les diènes tels que butadiène, isoprène, pouvant être hydrogénés après polymérisation,
- les alkylènes tels que éthylène, propylène,
- les siloxanes tels que diméthylsiloxane, diphénylsiloxane, méthylphénylsiloxane,
- les composés fluorés tels que (méth)acrylate de trifluoroéthyle, (méth)acrylate de pentafluoropopyle, (méth) acrylate d'heptafluorobutyle, (méth)acrylate d'octafluoropentyle, (méth)acrylate de pentadécafluorooctyle, (méth)acrylate d'eicosafluoroundécyle, fluorure de vinyle, tétrafluoroéthylène,

ou de produits de polycondensation, polyesters ou polyamides.

5. Fils, fibres, filaments selon l'une des revendications précédentes, **caractérisés en ce que** la ou les séquence(s) à caractère hydrophile du copolymère greffé sont constitué(s) à partir d'unités monomère choisies parmi :

   - l'oxyde d'éthylène
   - les acides (méth)acryliques, l'acide maléique, l'acide fumarique, l'acide itaconique,
   - les dérivés d'acrylamide tels que la (méth)acrylamide, la N-méthylacrylamide, la N-isopropylacrylamide,
   - l'éthylèneimine,
   - l'alcool vinylique,
   - la vinylpyrrolidone, la vinylméthyloxazolidone,
   - le vinylsulfonate,
   - le méthallylsulfonate de sodium
   - le méthacrylate de glycérol.

6. Fils, fibres, filaments selon l'une des revendications précédentes, **caractérisés en ce que** le copolymère greffé comprend :

   - une chaîne principale d'ancrage sur les particules solides comportant des groupements de (méth)acrylate de dialkylaminoéthyle, N,N-diméthalylacrylamide, 2-vinylpyridine, 4-vinylpyridine, seuls ou en mélange,
   - un ou plusieurs greffons hydrophiles poly(oxyde d'éthylène), et
   - un ou plusieurs greffons hydrophobes à base de (méth)acrylates d'alkyle, d'esters vinyliques seuls ou copolymérisés avec des dérivés styréniques ou alkylstyréniques, des monomères fluorés tels que le méthacrylate de trifluoroéthyle, ou du méthacrylate de 3-(triméthoxysilyl)propyl.

7. Fils, fibres, filaments selon l'une des revendications précédentes, **caractérisés en ce qu'**il sont à base de polymère thermoplastique

8. Fils, fibres, filaments selon la revendication 7, **caractérisés en ce qu'**il sont à base de polyester ou de polyamide

9. Fils, fibres, filaments selon l'une des revendications précédentes, **caractérisés en ce que** le copolymère greffé représente entre 0.1 et 5% en poids par rapport au poids du fil

10. Fils, fibres, filaments selon la revendication 9, **caractérisés en ce que** le copolymère greffé représente entre 0.2 et 2% en poids par rapport au poids du fil

11. Fils, fibres, filaments selon l'une des revendications précédentes, **caractérisés en ce que** le titre global du fil est compris entre 200 et 950 dtex

12. Fils, fibres, filaments selon l'une des revendications précédentes, **caractérisés en ce que** le titre au brin du fil est compris entre 1.5 et 7 dtex

13. Procédé de préparation des fils, fibres, filaments selon l'une des revendications 1 à 12, comprenant les étapes suivantes :

   1) filer le matériau constitutif du fil
   2) éventuellement étirer le fil
   3) éventuellement texturer le fil
   4) traiter le fil à l'aide d'un liquide comprenant le copolymère greffé défini selon l'une des revendications 1 à 12

14. Procédé selon la revendication 13, **caractérisé en ce que** le matériau est un polymère thermoplastique et **en ce que** l'étape 1) est un filage à l'état fondu du polymère

**15.** Procédé selon la revendication 13 ou 14, **caractérisé en ce que** l'étape 4) est réalisée après les étape 2) et 3)

**16.** Procédé selon la revendication 13 ou 14, **caractérisé en ce que** l'étape 4) est réalisée avant les étape 2) et 3)

**17.** Procédé selon l'une des revendications 13 à 16, **caractérisé en ce que** le liquide est une composition d'ensimage.

**18.** Procédé selon l'une des revendications 13 à 17, **caractérisé en ce que** le copolymère greffé représente entre 5 et 35% en poids par rapport au poids du liquide, de préférence entre 10 et 20%

**19.** Tissu, **caractérisé en ce qu'**il comprend au moins en partie des fils, fibres ou filaments selon l'une des revendications 1 à 12 ou des fils, fibres ou filaments obtenus par le procédé selon l'une des revendications 13 à 18

**20.** Procédé de préparation d'un tissu chaîne et trame selon la revendication 19 comprenant le tissage réalisé sur un métier à tisser, au moins une partie des fils de chaîne étant des fils selon l'une des revendications 1 à 12 ou des fils, fibres ou filaments obtenus par le procédé selon l'une des revendications 13 à 18

**21.** Procédé selon la revendication 20, **caractérisé en ce qu'**il ne comprend pas d'étape d'encollage

**22.** Procédé selon la revendication 20 ou 21, **caractérisé en ce que** le métier à tisser est un métier à tisser à sec, tel qu'un métier à jet d'air, un métier à lance(s) ou un métier à projectile(s)

**23.** Utilisation des fils, fibres, filaments selon l'une des revendications 1 à 12 ou ou des fils, fibres ou filaments obtenus par le procédé selon l'une des revendications 13 à 18 pour réaliser des tissus pour sacs gonflables de sécurité

**24.** Utilisation des fils, fibres ou filaments selon l'une des revendications 1 à 12 ou des fils, fibres ou filaments obtenus par le procédé selon l'une des revendications 13 à 18 dans la fabrication de sacs gonflables de sécurité

## Claims

**1.** Yarns, fibres or filaments which can be woven without sizing, **characterised in that** a grafted copolymer is present on at least a part of the surface of the yarns, fibers or filaments, the grafted copolymer comprising at least three sequences of different chemical nature, including one or more sequence(s) for anchoring to solids, one or more sequence(s) with a hydrophobic character and one or more sequence(s) with a hydrophilic character, composed of:

a) 1 to 80% by mass, preferably 5 to 40% by mass, of one or more sequence(s) for anchoring to solids composed of a linear or branched, cycloalkyl or aromatic hydrocarbon chain comprising basic nitrogenous groups of the following type: heterocyclic, $-NH_2$, -NH-, -NHR or $-NR_2$, $-CONH_2$, -CONHR, $-CONR_2$ (where R is a $(C_1-C_6)$alkyl radical, optionally substituted by one or more -OH, -COO-, -CO-, -O- or $-SO_3H$ groups), which can comprise -COO- groups, the content by mass of basic nitrogenous monomers in the anchoring chain being at least 5% and preferably 30%, and
b) at least 10% by mass, preferably 25 to 80% by mass, of one or more sequence(s) with a hydrophobic character, composed of a linear or branched, cycloalkyl or aromatic hydrocarbon chain which can comprise -COO-, -S-, -F or $-Si(OR')_n(R'')_{2-n}-$ groups (where R' and R" represent alike or different $(C_1-C_{10})$alkyl or aryl radicals and n = 0 to 2) and formed of monomer units, the solubility parameter of which is less than or equal to 21.5 $J^{1/2}/cm^{3/2}$, preferably less than 19 $J^{1/2}/cm^{3/2}$,
c) at least 10% by mass, preferably 15 to 70% by mass, of one or more sequence(s) with a hydrophilic character, composed of a linear or branched hydrocarbon chain comprising -O-, -OH, -NCO, -COO-, -COOH, $-CONH_2$, -CONHR"' (where R"' is a $C_1-C_3$ alkyl radical), -NH-, -S- or $-SO_3H$ groups and formed of monomer units, the solubility parameter of which is greater than 22 $J^{1/2}/cm^{3/2}$, preferably greater than 22.5 $J^{1/2}/cm^{3/2}$.

**2.** Yarns, fibres, filaments according to claim 1, **characterised in that** the molecular weight of the anchoring sequence (s), of the sequence(s) with a hydrophobic character and of the sequence(s) with a hydrophilic character of the grafted copolymer is less than or equal to 10 000.

**3.** Yarns, fibres, filaments according to claim 1 or 2, **characterised in that** the anchoring sequence(s) of the grafted copolymer comprises basic nitrogenous groups introduced from one or more compound(s) chosen from:

a) - vinylpyridines, such as 2-vinylpyridine, 3-vinylpyridine, 4-vinylpyridine or 2-methyl-5-vinylpyridine,

- vinylimidazole, 2-methyl-N-vinylimidazole, vinylcarbazole, N-vinylpyrrolidone, 3-methyl-N-vinylpyrazole, 4-methyl-5-vinylthiazole, N-vinylcaprolactam or ethylimidazolidone methacrylate,
- (meth)acrylamides, such as (meth)acrylamide, N-methylacrylamide, N-isopropylacrylamide and N,N-dimethylacrylamide,
- N-methylol(meth)acrylamide, N,N-dimethylol(meth)acrylamide, 2-acrylamido-2-methyl-1-propanesulfonic acid, diacetone acrylamide, methyl 2-acrylamido-2-methoxyacetate or N,N,N-tris(hydroxymethyl)methacrylamide,
- aminoalkyl (meth)acrylates of following formula

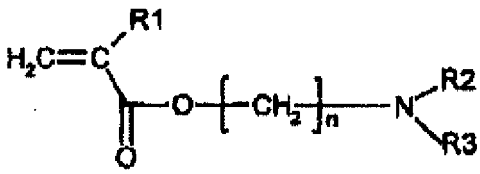

where $R_1$ is a hydrogen atom or a $(C_1\text{-}C_4)$alkyl radical, $R_2$ and $R_3$, which are identical or different, each represent a $(C_1\text{-}C_6)$alkyl radical and n = 0 to 6,
said nitrogenous groups being, in this first case, introduced by radical copolymerization of one or more abovementioned unsaturated ethylenic monomer(s), and

b) - N,N-diethyl-1,4-butanediamine,
1-(2-amino-ethyl)piperazine,
2-(1-pyrrolidyl)ethylamine,
4-amino-2-methoxypyrimidine,
2-(dimethylamino)ethanol,
1-(2-hydroxyethyl)piperazine,
4-(2-hydroxyethyl)morpholine,
2-mercaptopyrimidine, 2-mercaptobenzimidazole,
N,N-dimethyl-1,3-propanediamine,
4-(2-aminoethyl)pyridine, N,N-diallylmelamine,
3-amino-1,2,4-triazole,
1-3-aminopropyl)imidazole,
4-(2-hydroxyethyl)pyridine,
1-(2-hydroxyethyl)imidazole or
3-mercapto-1,2,4-triazole,
said nitrogenous groups being, in this second case,
attached to a linear or grafted copolymer by taking advantage of reactive functional groups introduced along the preformed chain.

4. Yarns, fibres, filaments according to one of the preceding claims, **characterised in that** the sequence(s) with a hydrophobic character of the grafted copolymer are formed from monomer units chosen from:

- (meth)acrylic acid esters, such as methyl (meth)acrylate, ethyl (meth)acrylate, propyl (meth)acrylate, butyl (meth)acrylate, hexyl (meth)acrylate, cyclohexyl (meth)acrylate, ethylhexyl (meth)acrylate, octyl (meth)acrylate, nonyl (meth)acrylate, isodecyl (meth)acrylate, lauryl (meth)acrylate, stearyl (meth)acrylate, pentadecyl (meth) acrylate, cetyl (meth)acrylate, behenyl (meth)acrylate or 3-(trimethoxysilyl)propyl (meth)acrylate,
- vinyl esters, such as vinyl acetate, vinyl propionate, vinyl butyrate, vinyl sorbate, vinyl hexanoate, vinyl ethylhexanoate, vinyl laurate or vinyl stearate,
- styrene and alkylstyrenes, such as $\alpha$-methylstyrene, vinyltoluene or tert-butylstyrene,
- dienes, such as butadiene or isoprene, which can be hydrogenated after polymerization,
- alkylenes, such as ethylene or propylene,
- siloxanes, such as dimethylsiloxane, diphenylsiloxane or methylphenylsiloxane,
- fluorinated compounds, such as trifluoroethyl (meth)acrylate, pentafluoropropyl (meth)acrylate, heptafluorobutyl (meth)acrylate, octafluoropentyl (meth)acrylate, pentadecafluorooctyl (meth)acrylate, eicosafluoroundecyl (meth)acrylate, vinyl fluoride or tetrafluoroethylene,
or are products of polycondensation, polyesters or polyamides.

**5.** Yarns, fibres, filaments according to one of the preceding claims, **characterised in that** the sequence(s) with a hydrophilic character of the grafted copolymer are formed from monomer units chosen from:

- ethylene oxide,
- (meth)acrylic acids, maleic acid, fumaric acid or itaconic acid,
- acrylamide derivatives, such as (meth)acrylamide, N-methylacrylamide or N-isopropylacrylamide,
- ethyleneimine,
- vinyl alcohol,
- vinylpyrrolidone or vinylmethyloxazolidone,
- vinylsulfonate,
- sodium methallylsulfonate,
- glycerol methacrylate.

**6.** Yarns, fibres, filaments according to one of the preceding claims, **characterised in that** the grafted copolymer comprises:

- a main chain for anchoring to solid particles comprising dialkylaminoethyl (meth)acrylate, N,N-dimethalylacrylamide, 2-vinylpyridine or 4-vinylpyridine groups, alone or as a mixture,
- one or more hydrophilic poly(ethylene oxide) grafts, and
- one or more hydrophobic grafts based on alkyl (meth)acrylates or vinyl esters, alone or copolymerized with styrene or alkylstyrene derivatives, fluorinated monomers, such as trifluoroethyl methacrylate, or 3-(trimethoxysilyl)-propyl methacrylate.

**7.** Yarns, fibres, filaments according to of the preceding claims, **characterised in that** it is based on thermoplastic polymer.

**8.** Yarns, fibres, filaments according to claim 7, **characterised in that** it is based on polyester or on polyamide.

**9.** Yarns, fibres, filaments according to one of the preceding claims, **characterised in that** the grafted copolymer represents between 0.1 and 5% by weight, with respect to the weight of the yarn.

**10.** Yarns, fibres, filaments according to claim 9, **characterised in that** the grafted copolymer represents between 0.2 and 2% by weight, with respect to the weight of the yarn.

**11.** Yarns, fibres, filaments according to one of the preceding claims, **characterised in that** the overall count of the yarn is between 200 and 950 dtex.

**12.** Yarns, fibres, filaments according to one of the preceding claims, **characterised in that** the strand count of the yarn is between 1.5 and 7 dtex.

**13.** A process for the preparation of the yarns, fibres, filaments according to one of claims 1 to 12, comprising the following stages:

1) spinning the constituent material of the yarn,
2) optionally drawing the yarn,
3) optionally texturing the yarn,
4) treating the yarn using a liquid comprising the grafted copolymer defined according to one of claims 1 to 12.

**14.** The process according to claim 13, **characterised in that** the material is a thermoplastic polymer and **in that** stage 1) is a melt spinning of the polymer.

**15.** The process according to claim 13 or 14, **characterised in that** stage 4) is carried out after stages 2) and 3).

**16.** The process according to claim 13 or 14, **characterised in that** stage 4) is carried out before stages 2) and 3).

17. The process according to one of claims 13 to 16, **characterised in that** the liquid is a sizing composition.

18. The process according to one of claims 13 to 17, **characterised in that** the grafted copolymer represents between 5 and 35% by weight, with respect to the weight of the liquid, preferably between 10 and 20%.

19. A fabric, **characterised in that** it comprises at least in part yarns, fibres or filaments according to one of claims 1 to 12 or yarns, fibres or filaments obtained by the process according to one of claims 13 to 18.

20. A process for the preparation of a warp and weft fabric according to claim 19, comprising the weaving carried out on a loom, at least a part of the warp yarns being yarns according to one of claims 1 to 12 or yarns, fibres or filaments obtained by the process according to one of claims 13 to 18.

21. The process according to claim 20, **characterised in that** it does not comprise a glueing stage.

22. The process according to claim 20 or 21, **characterised in that** the loom is a dry loom, such as an air jet loom, a rapier loom or a gripper-projectile loom.

23. The use of the yarns, fibres, filaments according to one of claims 1 to 12 or of the yarns, fibres, filaments obtained by the process according to one of claims 13 to 18 in producing fabrics for airbags.

24. The use of the yarns, fibres or filaments as claimed in one of claims 1 to 12 or of the yarns, fibres or filaments obtained by the process according to one of claims 13 to 18 in the manufacture of airbags.

## Patentansprüche

1. Fäden, Fasern oder Filamente, die ohne Leimung verwebbar sind, **dadurch gekennzeichnet, dass** auf mindestens einem Teil der Oberfläche der Fäden, Fasern oder Filamente ein Pfropfcopolymer vorhanden ist, wobei das Pfropfcopolymer mindestens drei Sequenzen von unterschiedlicher chemischer Natur umfasst, darunter eine oder mehrere Sequenz(en) zur Verankerung auf Festkörpern, eine oder mehrere Sequenz(en) von hydrophobem Charakter und eine oder mehrere Sequenz(en) von hydrophilem Charakter, sich zusammensetzend aus:

   a) 1 bis 80 Massen-%, bevorzugt 5 bis 40 Massen-%, von einer oder mehreren Sequenz(en) zur Verankerung auf Festkörpern, bestehend aus einer linearen oder verzweigten, cycloalkylischen oder aromatischen Kohlenwasserstoffkette, die stickstoffhaltige basische Gruppen des Typs heterozyklisch, $-NH_2$, -NH-,-NHR oder $-NR_2$, $-CONH_2$, -CONHR, $-CONR_2$ (wobei R ein $(C_1-C_6)$Alkylrest ist, der gewünschtenfalls mit einer oder mehreren Gruppe(n) -OH, -COO-, -CO-, -O-, $-SO_3H$ substituiert sein kann) trägt, die Gruppen -COO- tragen kann, wobei der Massengehalt an stickstoffhaltigen basischen Monomeren in der Verankerungskette mindestens 5%, bevorzugt 30%, ist, und
   b) mindestens 10 Massen-%, bevorzugt 25 bis 80 Massen-%, von einer oder mehreren Sequenz(en) von hydrophobem Charakter, bestehend aus einer linearen oder verzweigten, cycloalkylischen oder aromatischen Kohlenwasserstoffkette, die Gruppen -COO-, -S-, -F, $-Si(OR')_n(R'')_{2-n}-$ tragen kann (wobei R' und R'' ähnliche oder verschiedene $(C_1-C_{10})$Alkyl- oder Arylreste darstellen und n = 0 bis 2), die aus Monomeren-Einheiten gebildet ist(sind), deren Löslichkeitsparameter weniger als oder gleich 21,5 $J^{1/2}/cm^{3/2}$, bevorzugt weniger als 19 $J^{1/2}/cm^{3/2}$ ist,
   c) mindestens 10 Massen-%, bevorzugt 15 bis 70 Massen-%, von einer oder mehreren Sequenz(en) von hydrophilem Charakter, bestehend aus einer linearen oder verzweigten Kohlenwasserstoffkette, die Gruppen -O-, -OH, -NCO, -COO-, -COOH, $-CONH_2$, -CONHR''' (wobei R''' ein $(C_1-C_3)$Alkylrest ist), -NH-, -S-, $-SO_3H$ trägt, die aus Monomeren-Einheiten gebildet ist(sind), deren Löslichkeitsparameter mehr als 22 $J^{1/2}/cm^{3/2}$, bevorzugt mehr als 22,5 $J^{1/2}/cm^{3/2}$ ist.

2. Fäden, Fasern, Filamente nach Anspruch 1, **dadurch gekennzeichnet, dass** das Molekulargewicht der Sequenz (en) zur Verankerung, der Sequenz(en) von hydrophobem Charakter und der Sequenz(en) von hydrophilem Charakter des Pfropfcopolymeren weniger als oder gleich 10000 ist.

3. Fäden, Fasern, Filamente nach Anspruch 1 oder 2, **dadurch gekennzeichnet, dass** die Sequenz(en) zur Verankerung des Pfropfcopolymeren stickstoffhaltige basische Gruppen umfasst, die ausgehend von einer oder mehreren Verbindungen eingeführt sind, die ausgewählt sind aus:

a) Vinylpyridine wie etwa 2-Vinylpyridin, 3-Vinylpyridin, 4-Vinylpyridin oder 2-Methyl-5-vinylpyridin,

- Vinylimidazol., 2-Methyl-N-vinylimidazol, Vinylcarbazol, N-Vinylpyrrolidon, 3-Methyl-N-vinylpyrazol, 4-Methyl-5-vinylthiazol., N-Vinylcaprolactam, Ethylimidazolidon-methacrylat,
- (Meth)acrylamide wie etwa (Meth)acrylamid, N-Methylacrylamid, N-Isopropylacrylamid und N,N-Dimethylacrylamid,
- N-Methylol(meth)acrylamid, N,N-Dimethylol(meth)acrylamid, 2-Acrylamido-2-methyl-1-propansulfonsäure, Diacetonacrylamid, Methyl-2-acrylamido-2-methoxyacetat, N-Tris(hydroxymethyl)methylacrylamid,
- Aminoalkyl(meth)acrylate der folgenden Formel

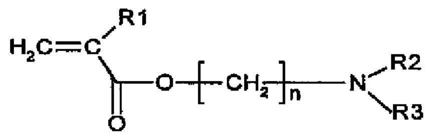

worin $R_1$ ein Wasserstoffatom oder ein $(C_1-C_4)$Alkylrest ist; $R_2$ und $R_3$ identisch oder verschieden sind und je einen $(C_1-C_6)$Alkylrest darstellen, und n = 0 bis 6,
wobei die besagten stickstoffhaltigen Gruppen in diesem ersten Fall mittels radikalischer Copolymerisation von einem oder mehreren ethylenischen ungesättigten, hier vorstehend zitierten Monomeren eingeführt sind, und

b) N,N-Diethyl-1,4-butandiamin, 1-(2-Aminoethyl)-piperazin, 2-(1-Pyrrolidyl)-ethylamin, 4-Amino-2--methoxypyrimidin, 2-Dimethylaminoethanol, 1-(2-Hydroxyethyl)piperazin, 4-(2-Hydroxyethyl)morpholin, 2-Mercaptopyrimidin, 2-Mercaptobenzimidazol, N,N-Dimethyl-1,3-propandiamin, 4-(2-Aminoethyl)-pyridin, N,N-Diallylmelamin, 3-Amino-1,2,4-triazol, 1-(3-Aminopropyl)imidazol, 4-(2-Hydroxyethyl)pyridin, 1-(2-Hydroxyethyl)imidazol, 3-Mercapto-1,2,4-triazol,
wobei die besagten stickstoffhaltigen Gruppen in diesem zweiten Fall unter Ausnutzung von reaktiven Funktionen, die entlang der vorgeformten Kette eingeführt sind, auf ein lineares oder gepfropftes Copolymer fixiert sind.

4. Fäden, Fasern, Filamente nach einem der vorhergehenden Ansprüche, **dadurch gekennzeichnet, dass** die Sequenz(en) von hydrophobem Charakter des Pfropfcopolymeren ausgehend von Monomeren-Einheiten gebildet sind, die ausgewählt sind aus:

- (Meth)acrylsäureestern wie etwa Methyl(meth)acrylat, Ethyl(meth)acrylat, Propyl(meth)acrylat, Butyl(meth) acrylat, Hexyl(meth)acrylat, Cyclohexyl(meth)acrylat, Ethylhexyl(meth)acrylat, Octyl(meth)acrylat, Nonyl(meth) acrylat, Isodecyl(meth)acrylat, Dauryl(meth)acrylat, Stearyl(meth)acrylat, Pentadecyl(meth)acrylat, Cetyl(meth) acrylat, Behenyl(meth)acrylat, 3-(Trimethoxysilyl)propyl(meth)acrylat,
- Vinylestern wie etwa Vinylacetat, Vinylpropionat, Vinylbutyrat, Vinylsorbat, Vinylhexanoat, Vinylethylhexanoat, Vinyllaurat, Vinylstearat,
- Styrol und Alkylstyrole wie etwa $\alpha$-Methylstyrol, Vinyltoluol, tert-Butylstyrol,
- Diene wie etwa Butadien, Isopren, die nach der Polymerisation hydriert werden können,
- Alkylene wie etwa Ethylen, Propylen,
- Siloxane wie etwa Dimethylsiloxan, Diphenylsiloxan, Methylphenylsiloxan,
- fluorierte Verbindungen wie etwa Trifluorethyl(meth)acrylat, Pentafluorpropyl(meth)acrylat, Heptafluorbutyl (meth)acrylat, Octafluorpentyl(meth)acrylat, Pentadecafluoroctyl(meth)acrylat, Eicosafluorundecyl(meth)acrylat, Vinylfluorid, Tetrafluoroethylen,

oder Polykondensationsprodukte, Polyester oder Polyamide sind.

5. Fäden, Fasern, Filamente nach einem der vorangehenden Ansprüche, **dadurch gekennzeichnet, dass** die Sequenz(en) von hydrophilem Charakter des Pfropfcopolymeren ausgehend von Monomeren-Einheiten gebildet sind, die ausgewählt sind aus:

- Ethylenoxid,
- (Meth)acrylsäuren, Maleinsäure, Fumarsäure, Itaconsäure,
- Acrylamidderivate wie etwa (Meth)acrylamid, N-Methylacrylamid, N-Isopropylacrylamid,

- Ethylenimin,
- Vinylalkohol,
- Vinylpyrrolidon, Vinylmethyloxazolidon,
- Vinylsulfonat,
- Natrium-methallylsulfonat,
- Glycerinmethacrylat.

**6.** Fäden, Fasern, Filamente nach einem der vorangehenden Ansprüche, **dadurch gekennzeichnet, dass** das Propfcopolymer umfasst:

- Eine Hauptkette zur Verankerung auf festen Partikeln, die Dialkylaminoethyl(meth)acrylatgruppen, N,N-Dimethallylacrylamidgruppen, 2-Vinylpyridingruppen, 4-Vinylpyridingruppen, alleine oder gemischt, trägt,
- eine oder mehrere hydrophile aufgepfropfte Poly(oxy)ethylengruppen, und
- eine oder mehrere hydrophobe aufgepfropfte Gruppen, die auf Alkyl(meth)acrylaten, Vinylestern, alleine oder copolymerisiert mit Styrolderivaten oder Alkylstyrolderivaten, fluorierten Monomeren wie etwa Trifluorethylethacrylat oder 3-(Trimethoxysilyl)propylmethacrylat, beruhen.

**7.** Fäden, Fasern, Filamente nach einem der vorangehenden Ansprüche, **dadurch gekennzeichnet, dass** sie auf Basis eines thermoplastischen Polymers sind.

**8.** Fäden, Fasern, Filamente nach Anspruch 7, **dadurch gekennzeichnet, dass** sie auf Basis von Polyester oder Polyamid sind.

**9.** Fäden, Fasern, Filamente nach einem der vorangehenden Ansprüche, **dadurch gekennzeichnet, dass** das Pfropfcopolymer zwischen 0,1 und 5 Gewichtsprozente, bezogen auf den Faden, beträgt.

**10.** Fäden, Fasern, Filamente nach Anspruch 9, **dadurch gekennzeichnet, dass** das Pfropfcopolymer zwischen 0,2 und 2 Gewichtsprozente, bezogen auf den Faden, beträgt.

**11.** Fäden, Fasern, Filamente nach einem der vorangehenden Ansprüche, **dadurch gekennzeichnet, dass** der Gesamttiter des Fadens zwischen 200 und 950 dtex beträgt.

**12.** Fäden, Fasern, Filamente nach einem der vorangehenden Ansprüche, **dadurch gekennzeichnet, dass** der Einzeltiter des Fadens zwischen 1,5 und 7 dtex beträgt.

**13.** Verfahren zur Herstellung von Fäden, Fasern, Filamenten nach einem der Ansprüche 1 bis 12, umfassend die folgenden Schritte:

1) Spinnen des fadenbildenden Materials
2) gewünschtenfalls Strecken des Fadens
3) gewünschtenfalls Texturieren des Fadens
4) Behandeln des Fadens mit Hilfe einer Flüssigkeit, die das Pfropfcopolymer wie in einem der Ansprüche 1 bis 12 definiert umfasst.

**14.** Verfahren nach Anspruch 13, **dadurch gekennzeichnet, dass** das Material ein thermoplastisches Polymer ist und dass der Schritt 1) ein Schmelzspinnen des Polymeren ist.

**15.** Verfahren nach Anspruch 13 oder 14, **dadurch gekennzeichnet, dass** Schritt 4) nach den Schritten 2) und 3) ausgeführt wird.

**16.** Verfahren nach Anspruch 13 oder 14, **dadurch gekennzeichnet, dass** Schritt 4) vor den Schritten 2) und 3) ausgeführt wird.

**17.** Verfahren nach einem der Ansprüche 13 bis 16, **dadurch gekennzeichnet, dass** die Flüssigkeit eine Schlichtungszusammensetzung ist.

**18.** verfahren nach einem der Ansprüche 13 bis 17, **dadurch gekennzeichnet, dass** das Pfropfcopolymer zwischen 5 und 35 Gewichtsprozent, bevorzugt zwischen 10 und 20 Gewichtsprozent, bezogen auf das Gewicht der Flüssigkeit, beträgt.

**19.** Gewebe **dadurch gekennzeichnet, dass** es mindestens teilweise Fäden, Fasern oder Filamente nach einem der Ansprüche 1 bis 12 oder Fäden, Fasern oder Filamente erhalten nach dem Verfahren nach einem der Ansprüche 13 bis 18 umfasst.

**20.** Verfahren zur Herstellung eines Gewebes mit Kett- und Schussfäden nach Anspruch 19, umfassend das Verweben auf einem Webstuhl, wobei mindestens ein Teil der Kettfäden Fäden nach einem der Ansprüche 1 bis 12 oder Fäden, Fasern oder Filamente erhalten nach dem Verfahren nach einem der Ansprüche 13 bis 18 sind.

**21.** Verfahren nach Anspruch 20, **dadurch gekennzeichnet, dass** es keinen Leimungsschritt umfasst.

**22.** Verfahren nach Anspruch 20 oder 21, **dadurch gekennzeichnet, dass** der Webstuhl ein Trockenwebstuhl, wie etwa ein Luftdüsen-Webstuhl, ein Greifer-Webstuhl oder ein Projektil-Webstuhl, ist.

**23.** Verwendung von Fäden, Fasern, Filamenten nach einem der Ansprüche 1 bis 12 oder von Fäden, Fasern oder Filamenten erhalten nach dem Verfahren nach einem der Ansprüche 13 bis 18 zur Herstellung von Airbag-Geweben.

**24.** Verwendung von Fäden, Fasern oder Filamenten nach einem der Ansprüche 1 bis 12 oder von Fäden, Fasern oder Filamenten erhalten nach dem Verfahren nach einem der Ansprüche 13 bis 18 in der Herstellung von Airbags.

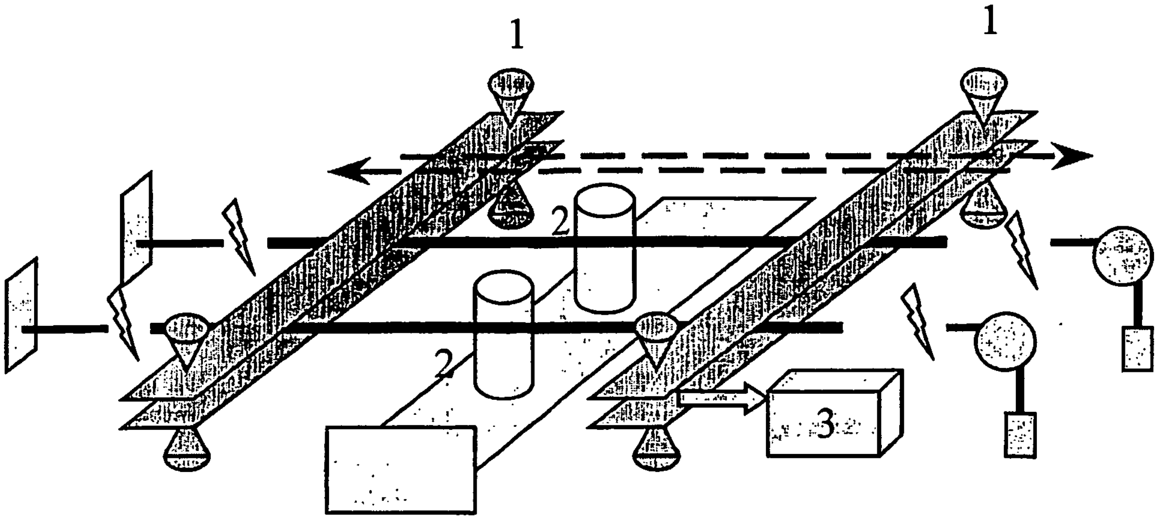


Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9728200 A


### Littérature non-brevet citée dans la description


- **D.W.VAN KREVELEN.** Properties of polymers. Their correlation with chemical structure ; their numerical estimation and prediction from additive group contributions. Elsevier, 1990, 189-225